# EUROPEAN PATENT APPLICATION

(11) **EP 0 941 890 A1**
(43) Date of publication of application: **15.09.1999**
(21) Application number: 99108259.5
(22) Date of filing: 16.02.1996
(51) Int. Cl.: B60P 1/54, B62D 53/06

(54) **Sliding bogie trailers**

(30) Priority: 17.02.1995 GB 9503128; 11.03.1995 GB 9504984; 01.04.1995 GB 9506820; 26.08.1995 GB 9517560
(62) Divisional of application: 96903093.1
(71) Applicant: Raven, Carole May, Ipswich, Suffolk IP2 9QJ (GB); Raven, Kevin William, Ipswich, Suffolk IP6 0JH (GB); Raven, Paul Anthony, Suffolk, Suffolk IP14 1AX (GB)
(72) Inventor: The designation of the inventor has not yet been filed
(74) Representative: McLean, Robert Andreas

(57) **Abstract**

The present invention relates to sliding bogie trailers, and in particular to an extendible flatbed trailer which may loaded and unloaded by a crane. The trailer 201 comprises a chassis section and a wheeled bogie section 203 slidably connected to the chassis section and relatively movable between extended and retracted positions at which positions the sections may be secured into engagement with each other. The sections have load bearing floors, the floor of one section sliding under the floor 205 of the other section 203 when the sections are moved to a retracted position. Either the trailer 201 or a truck tractor unit 291 has a crane 292 mounted on or nearest the section having the floor which slides under the other floor 205. Preferably, the crane 292 has an arm with a reach sufficient to load the section farthest from the crane only when the sections are in the retracted position.

## Description

The present invention relates to sliding bogie trailers, and in particular to an extendible flatbed trailer which may loaded and unloaded by a crane.

Skeletal truck trailers often have a rear sliding bogie section which allows the trailers to be extendible between two lengths, for example 6.1 m (20 feet) and 12.2 m (40 feet). In one mode of usage, the length of the trailer is locked at either of these lengths for mounting of containers with these lengths. A 13.7 m (45 feet) container may also be carried on a 12.2 m trailer. Alternatively, the length of the trailer may be locked in the extended position to permit greater axle loading, according to the law. For example, a 6.1 m container above a certain weight may be required by law to be carried by a 12.2 m trailer in order to spread the axle loading.

The extension may be accomplished by having the set of wheels on a bogie which is itself fixed to a slider mechanism for slidably connecting the bogie to the chassis section. In one known system disclosed in US 4,877,293 a chassis slider mechanism consists of two overlapping rectangular C-section frames with neoprene blocks or roller bearings on each side running between the C-sections. The slider mechanism is lockable at a number of positions and at the endmost two locking positions there are end stops. The sections are locked in place by a pair of steel pins or bolts which are inserted through and protrude laterally inwards through matching holes in the sections at the various extension positions.

The pins or bolts are spring loaded through the holes and into the locked position, and are retracted for unlocking and movement of the sections to other extension positions by an air pressure or hydraulic piston mechanism.

The truck driver may operate this piston mechanism from his cab to unlock the sections, and then with the rear wheels locked, drive the cab to extend or retract the unloaded trailer to the vicinity of another extension position. The piston supply is then cut, and once the trailer sections are moved to one of the extension positions, the pins will automatically insert into the holes to lock the sections together.

In another known system, the trailer is formed from a single load bearing chassis section and is not extendible. The wheels are on a sliding bogie section which remains under the chassis section at all times. The sliding bogie may be set at two or more positions in order to adjust the axle loading so that the weight distribution between the trailer wheels and truck cab wheels is matched to the load, and within limits set by law. Such a sliding bogie runs in a track formed by the C-sections of the load bearing chassis and is moved and fixed in place in a similar manner to that described above, by outwardly or inwardly projecting pins which seat in or pass through apertures in the C-sections.

A number of problems have been observed in use with such sliding bogie systems. Firstly, a close tolerance is required between the pins and their holes so that when the truck trailer is on the road, the two sections do not move relative to each other and jar against the pins. The pins are slightly tapered to ease insertion, but the set of holes through the sections also must be aligned before the pins will seat. With age and use of the trailer, this alignment often deteriorates to the point where the pins do not seat properly through the holes, or will seat only with much time-consuming adjustment.

An air-driven or pneumatic diaphragm or piston mechanism may also become unreliable with age, or the diaphragm may burst or be unable to retract the pins through misaligned holes.

Trailers with unreliable mechanisms may simply be left locked in one extension position. If unlocked, the trailers are unusable. In a fleet of trailers, it has been known for 25% of the sliding bogie trailers to be unusable or unadjustable at any given time.

Because the mechanism is operated remotely from the cab, and because there is no visible or other indication that the pins have seated, apart from leaving the cab and inspecting the pins, there is a temptation when a truck is on a tight schedule, for a driver to drive away without having ensured that the sections have been locked securely together. A pattern of accidents on the road in the United Kingdom has been noted due to unlocked or partially locked sections moving and causing the trailer's bogie and wheels to move away or towards the cab's wheels. In some cases, the rear section of the extendible or sliding bogie trailer has hit the rear end stops with enough force to cause these stops to shear off, with the result that the wheeled rear section has become detached from the front section, which has then collapsed onto the road.

There are many variety of flatbed trailers which may be connected to and towed by a truck. Some consist mainly of a floored surface above the trailer frame; others have additional structural elements, for example, fold-down sides, curtain sides or top, rigid sides or top, and vertical side pillars. Such flatbed trailers are often used to transport a wide variety of items such as palletised goods, concrete or steel beams and logs.

The front of a flatbed trailer, or alternatively the rear of the truck, may be provided with a hydraulic crane for loading and unloading the flatbed trailer, normally to and from the side of the trailer. The arm of the crane should ideally be able to reach to the back of the flatbed trailer, although there is normally a trade-off between the capacity of the crane and the reach of the arm. The cost of a crane increases rapidly with the required reach. For example, a 13 m crane may cost five times as much as a 6.5 m crane, which may amount to several times the cost of the flatbed trailer alone.

Flatbed trailers can also be adapted to carry 6.1 m, 12.2 m or 13.7 m containers by the provision of flip-up standard twist-lock container mounts in the flatbed floor. However, as with non-sliding bogie skeletal trailers, in practice it may not be possible to carry a single heavily loaded 6.1 m container. This is because neither the front nor the rear half of the flatbed trailer will provide a suitable mounting location. For such a heavy short container, the problem with using the front half is that the weight of the container will not be over the trailer wheels, and the problem with using the rear half is that the load on the trailer is too distant from the truck.

Furthermore, a non-extendible flatbed trailer may either be too short or too long for a particular load, and a long flatbed trailer may need a large and expensive crane to fully load the trailer.

It is an object of the invention to provide an extendible flatbed trailer which may loaded and unloaded by a crane.

According to one aspect of the present invention, there is provided a trailer comprising a chassis section and a wheeled bogie section slidably connected to the chassis section and relatively movable between extended and retracted positions at which positions the sections may be secured into engagement with each other, the sections having load bearing floors, the floor of one section sliding under the floor of the other section when the sections are moved to a retracted position, characterised in that the trailer has a crane mounted on the section having the floor which slides under the other floor, the crane having an arm for loading and unloading the trailer.

Also according to the invention, there is provided a truck comprising a tractor and an extendible flatbed trailer, the tractor having a crane with an arm for loading and unloading the trailer, wherein the trailer comprises a chassis section and a wheeled bogie section slidably connected to the chassis section and relatively movable between extended and retracted positions at which positions the sections may be secured into engagement with each other, each of the sections having a floor, characterised in that the floor of the chassis section slides under the floor of the bogie section when the sections are moved to a retracted position.

Also according to the invention, there is provided a method of loading an extendible flatbed trailer attached to a tractor, the tractor or the trailer having a crane mounted thereon, and the trailer having floored chassis and bogie sections slidably connected and movable with respect to each other between extended and retracted positions at which positions the sections may be secured into engagement with each other, one of the floors sliding under the floor of the other section when the bogie section is moved from an extended to a retracted position, characterised in that the method comprises the steps of: moving the sections to a retracted position; using the crane to load one section; moving the sections to an extended position so that the one loaded section moves away from the crane; and using the crane to load the other section.

In a preferred embodiment, the sections engage automatically with each other at the extended or retracted positions. For example, one section may have a striker pin and the other section may have a clasp mechanism which receives and retains the striker pin to lock the sections in place when the sections are moved to one of the positions and which releases the striker pin to unlock the sections to allow the sections to be moved to another of the positions The trailer may be connected to the cab by standard means such as a fifth wheel connection.

The crane may be mounted on the truck or alternatively the crane may be mounted on the trailer. Preferably, the crane is mounted on the truck or at the front of the trailer. Because the flatbed trailer may retract to shorten its length, a smaller crane than would otherwise be the case may then be used to load the rear section of the trailer prior to extending the trailer to load the front section.

In some cases it may be advantageous to locate the crane at the rear of the flatbed trailer, since in this location the crane will be able to reach farther from the trailer and the truck.

In any case, it is preferable to keep the size and hence the cost and weight of the crane to a minimum, so that the arm of the crane has a reach which is sufficient to load or unload the section of the flatbed trailer which is farthest from the crane when the trailer is extended, only when the trailer is in the retracted position.
The trailer may comprise a chassis section, a wheeled bogie section slidably connected to the chassis section and relatively movable between forwards and rearwards positions, wherein one section has a striker pin and the other section has a clasp mechanism which receives and retains the striker pin to lock the sections in place when the sections are moved to one of the positions and which releases the striker pin to unlock the sections to allow the sections to be moved to another of the positions.

The trailer may comprise a substantially elongate chassis section with a coupling means at a front end for coupling the chassis section to the fifth wheel of a vehicle, a wheeled bogie section with a slider means for slidably connecting the bogie section to the chassis section, the bogie section being movable between forwards and rearwards positions with respect to the chassis section, and locking means for locking the bogie section at said positions, wherein the locking means comprises a striker pin on one of the said sections and a clasp on the other of the said sections, the clasp being adapted to receive and retain the striker pin to lock the said sections in place when the sections are moved to one of the said positions and to release the striker pin to unlock the said sections to allow the sections to be moved to another of the said positions.

The clasp may have a jaw which receives the striker pin.

Preferably the clasp and striker pin are automatically self-locking when the striker pin enters the clasp.

The clasp may be fixed to a section. Alternatively, the clasp may be slidably connected to a section and movable between forwards and rearwards locations with respect to the section and may have a locking means provided between the clasp and the section so that the clasp and the section may be locked into engagement at the locations. Each of these locations may then provide a secondary adjustment to the forwards and/or rearwards positions at which the sections may be locked together.

For example, the trailer may have one pin on one section movable between and lockable with two clasps on the other section, in which case the sections will be movable between one forwards and one rearwards position. Alternatively, the location of a clasp may itself be adjustable. For example, one of the clasps may be fixed and the other may be movable between and lockable at several forwards and rearwards locations. In this case adjusting the clasp to one of the locations will alter either the forwards or the rearwards position and also alter the distance between the forwards and rearwards position.

The clasp may advantageously be a fifth wheel type mechanism.

The striker pin may either be fixed to a section, or alternatively adjustable between forwards and rearwards locations in order to provide an adjustment to the positions at which the sections may be locked.

The striker pin may be in the bogie section. In a preferred embodiment, the striker pin is cylindrical and directed upwards so that it enters a clasp in a direction transverse to the length of the cylindrical pin.

Because it is most economical just to have one striker pin and clasp at each forward or rearward position, the striker pin and clasp should be relatively movable with respect to each other each other along a longitudinal centre line of the trailer, which will also normally be the middle of the trailer centered on the width of the wheelbase. This will also minimize any twisting forces between the sections when the trailer is on the road.

Because the alignment of the clasp and striker pin to each other is ensured by mounting them along the same line of travel between the sections, the striker pin and clasp will naturally engage with each other at the forward or rearward positions. In order to accommodate any small residual need for alignment, a clasp may be provided with an entrance neck leading to the jaw through which the striker pin is received and released.

It is advantageous if the clasp has a self-locking action so that it automatically locks the striker pin within the clasp when the striker pin is engaged with the jaw.

In one preferred embodiment of the self-locking action, the jaw is pivotable about an axis between an open and a closed position and is biased to the open position to receive or release the striker pin through the neck. One side of the open jaw holds back a locking slide hammer that is biased towards the open jaw and across the neck, so that when the striker pin is received by the open jaw the striker pin causes the jaw to pivot to the closed position. This releases the slide hammer which then moves across to close the neck and automatically lock the jaw in the closed position.

This self-locking mechanism is unlocked by withdrawing the slide hammer and latching the locking slide hammer in a withdrawn position, and then withdrawing the striker pin to open the jaw. In the case where both the striker pin and the clasp are fixed to their respective chassis sections, the striker pin is removed by relatively moving the trailer sections forwards or rearwards.

The locking slide hammer mechanism may be activated by an arm which extends to the side of the trailer to allow manual unlocking, and which has clearly visible locked and unlocked positions. Alternatively, the slide hammer may be activated hydraulically or pneumatically, for example being retracted by an air-driven piston or diaphragm mechanism.

In order to ensure that the locking slide hammer mechanism remains in the locked position it may be secured in place by a second locking mechanism, which may be a chain and clip or a padlock which, for example, secures the arm to the side of the trailer. Another way of providing the second locking mechanism is to provide a downward facing notch in the arm which engages, under the weight of the arm, with a matching feature at the side of the trailer.

To maximize safety and convenience, each locking slide hammer arm may extend to the same side of the trailer, chosen to be the near curb side.

The trailer may have mounting points for carrying containerized loads.

In a preferred embodiment of the invention, one or both sections of the sliding bogie trailer may have a load bearing floor.

Such a trailer is referred to herein as a flatbed trailer, although in the case where the flatbed trailer has two floored sections and is extendible, there may be a step in the floor level between the bogie and chassis sections. One floor, preferably the chassis section floor, may then slide under the other floor when the length of the flatbed trailer is extended or retracted.

It is preferred if each section has a longitudinal parallel pair of frame members that extend beneath the floors. In general, any trailer such as skeletal or flatbed trailers may have longitudinal frame members extending below respective floors. The frame members may economically be made mainly from steel beam sections which run the length of each section. One pair of frame members may be I-beams and the other pair of frame members may be C-beams, each I-beam being retained within and slidable along a C-beam.

To minimise friction at least one section may have below its floor a set of rollers which are connected to a section and which run on a load carrying track. These rollers may, for example, be solid steel wheels fixed to one frame section, or may alternatively be a set of steel rollers which roll on load carrying tracks between the I-beam and C-beam. Whilst one set of rollers may then be supported by the I-beam, another set of rollers from the other section may be retained or mounted within the C-beam.

A section should have a longitudinal load carrying track for supporting the other section between the extended and retracted positions. The track may serve simply to bear the weight of the section, or may also help to keep the frame sections in alignment as they are moved with respect to each other. In a preferred embodiment, a section is provided with two parallel tracks, spaced equally on either side of the longitudinal centre line of the section. Preferably, at least the floor of the section that slides under the floor of the other section has a track. The track may be provided by a surface on one of the frame members, for example the top of the I-beam. The C-beam may also advantageously have a surface forming a load carrying track. One set of rollers from a floor section which rides over the other floor section may advantageously roll on the track in the other floor.

A load carrying track may advantageously be substantially flush with the floor of a section. Since the track may, for example, be a steel strip, the track may then also provide reinforcement and help protect the floor which may, in order to keep the weight of the flatbed trailer down, be made from lighter but less durable materials such as aluminium or wood. Alternatively, all rollers and tracks may be concealed below the level of the frame floors.

In a preferred embodiment of the invention, the floor has a channel that runs parallel with the track for the distance between the forward and rearward positions. The channel has an inner retention surface, and the section which runs over the track has a retention means adapted to engage with the retention surface in order to prevent the sections from separating.

The invention will now be described further by way of example and with reference to the accompanying drawings, in which:
Figure 1 is a top plan view of a first extendible skeletal trailer with a forward chassis section with two clasps and a sliding rear bogie section with a pin, the sections being shown in between two locking positions;
Figure 2 is a side view of the extendible trailer of Figure 1;
Figure 3 is an enlarged fragmentary view of a part of Figure 1 showing the clasps and pin in more detail;
Figure 4 is a fragmentary perspective view from underneath and to one side of one of the clasps of Figure 3;
Figure 5 is a fragmentary perspective view from above and to one side of the pin of Figure 3;
Figure 6 is a top plan view of a second extendible skeletal trailer;
Figure 7 is a top plan view of a third extendible skeletal trailer;
Figure 8 is a fragmentary top plan view of a fourth sliding bogie trailer, showing a pneumatically driven clasp in an open position;
Figure 9 is a top plan view of the clasp of Figure 8 shown in a locked position;
Figure 10 is a fragmentary top plan view of a fifth sliding bogie trailer, showing an open sliding clasp and a locked fixed clasp;
Figure 11 is a side plan view of an extendible flatbed trailer according to a first embodiment of the invention, shown in an extended position;
Figure 12 is a top plan view of the flatbed trailer of Figure 11;
Figure 13 is a cross section view of the flatbed trailer of Figures 11 and 12, taken along the line XIII-XIII;
Figure 14 is a cross section view of the flatbed trailer of Figures 11 and 12, taken along the line XIV-XIV;
Figure 15 is a cross section view of the flatbed trailer of Figures 11 and 12, taken along the line XV-XV;
Figure 16 is a side plan view of the flatbed trailer of Figure 11 in a retracted position;
Figure 17 is a side plan view of an extendible flatbed trailer according to a second embodiment of the invention, shown in an extended position;
Figure 18 is a fragmentary side view of the front portion of the flatbed trailer of Figure 17; and
Figure 19 shows the flatbed trailer of Figure 16 when the trailer is attached to a truck which has a crane.

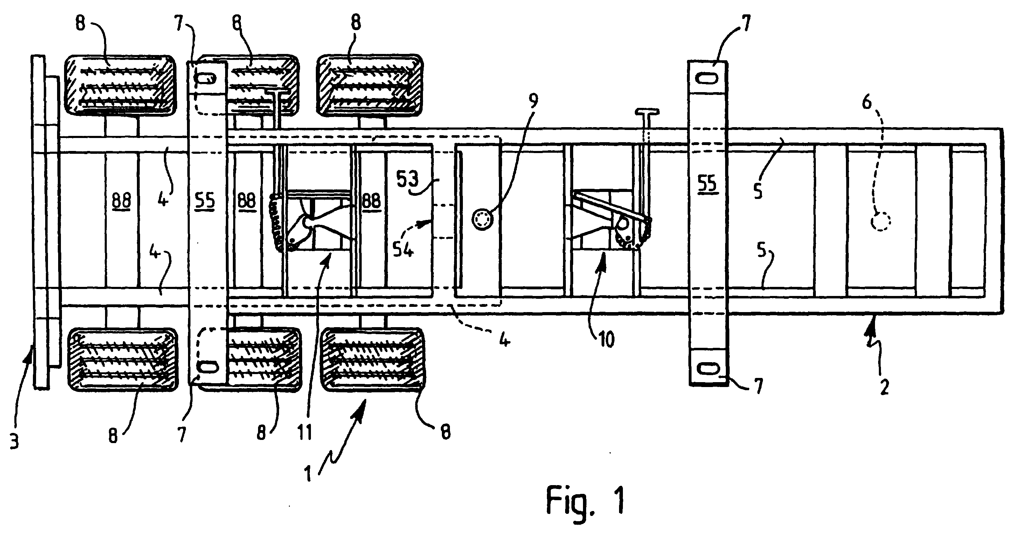

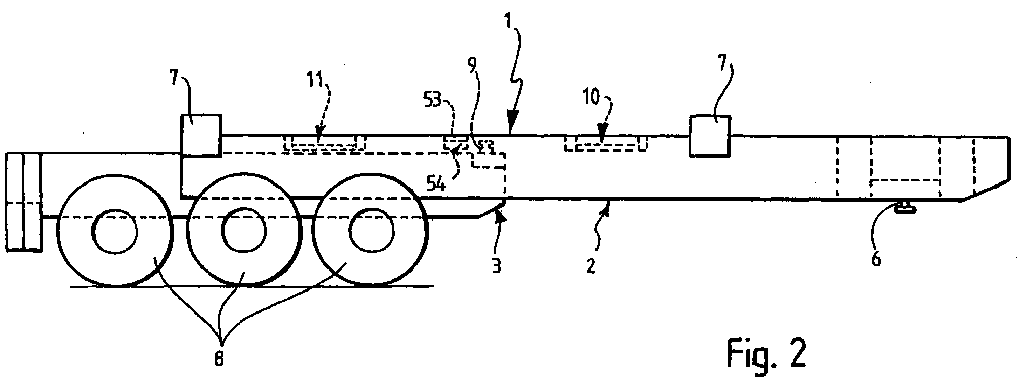

Referring now to Figures 1 and 2, these show an extendible skeletal trailer 1 with two transverse beams 55 each with a pair of standard twist lock mounting points 7 for a 6.1 m (20 feet) container. A front chassis section 2 has along its sides a pair of load bearing parallel steel I-beams 5 which present to each other inward facing C-sections. A sliding rear bogie section 3 has along its sides a pair of parallel inward facing steel C-beams 4 which are nested inside and slidable along the rear and central parts of the front C-sections.

The front chassis section 2 has a downwardly facing king pin 6 for connection with a known fifth wheel on a truck cab (not shown), and the rear bogie section 3 has a set of six wheels 8, three to a side, joined by three axles 88.

The front chassis section would, of course, normally be supported by drop-down support legs (not shown) when the trailer was not connected to a truck cab.

The rear section 3 has an upwardly facing striker pin 9 which travels between a forward 10 and a rearward clasp 11 which are fixed to the front chassis section 2. The striker pin 9 and clasps 10,11 are in the middle of the trailer, centered on the width of the trailer.
The trailer is shown in between the fully extended and retracted positions. In the retracted position the striker pin 9 is held by the front clasp 10, and in the extended position the striker pin is held by the rear clasp 11.

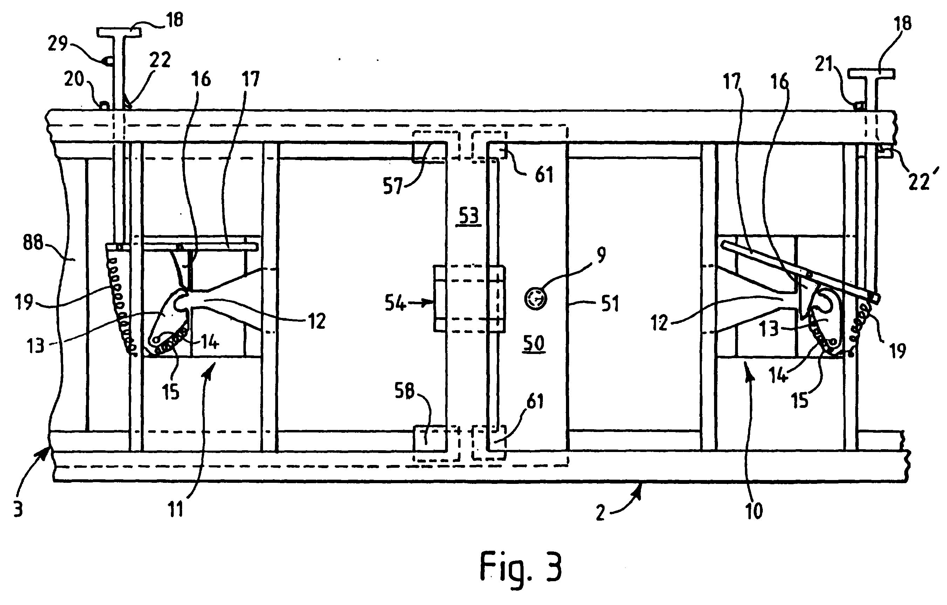

Referring now also to Figure 3, both clasps 10,11 have an entrance neck region 12 through which the striker pin 9 is received and released by a clasp. For clarity, the internal components of the clasps are shown exposed in the drawings, but would be concealed and protected by a cover in use.

The clasps have a jaw 13 mounted on a pivot 14 and biased with a spring 15 towards the open position in which the jaw holds back a slide hammer 16, as shown for the rear clasp 11. In the closed position, the slide hammer 16 closes off the neck 12 and locks the pivotable jaw 13 in the closed position, as shown for the front clasp 10.

The slide hammers 16 are connected to levers 17 which in turn are connected to and may be manually activated by arms 18 which project laterally outwards at one side of the trailer.

The locking slide hammers 16 are biased by springs 19 to the closed position. The open jaw 13 for the open clasp 11, holds back the slide hammer 14, and the slide hammer 14 for the closed clasp 10, holds back the closed jaw 13. The open clasp 11 will remain open until the striker pin 9 is received and engaged within it. The closed clasp 10 will remain closed until the locking slide hammer arm 18 is retracted to the open position.

When the striker pin 9 enters the neck 12 of an open clasp 11, if there is any slight misalignment between the pin and the clasp, the pin will be guided by the sides of the neck to the jaw 13. The jaw 13 then receives the striker pin 9 and pivots back, whereupon the locking slide hammer 16 is free to move under the action of the slide hammer spring 19 to close the opening to the neck 12 and lock the striker pin within the clasp.

The slide hammer arms 18 both have an eyelet 29 which in the closed position aligns with another eyelet 20 on the chassis section 2, as shown for the aligned eyelets 21 of the closed clasp 10. The arm 18, and hence locking slide hammer 16, can then be further secured by a padlock or a chain through the aligned eyelets to prevent any accidental release of the arm.

The forward clasp 10 is shown in the closed position for illustrative purposes only. In normal use the clasp cannot be closed without the jaw 13 first being engaged by the striker pin 9 and rotated away from the neck region 12. The striker pin 9 would then be held securely by the jaw 13 and slide hammer 16.

In order to extend or retract the trailer, the truck driver would first fix all wheel brakes on, and then manually retract one of the arms 18 from the closed to the open position. Each arm is provided with a latch 22 which engages with a feature (not shown) on the outside of the trailer to temporarily hold back the slide hammer arm 18. The driver would then release just the brakes for the cab wheels and drive forwards or in reverse to retract the striker pin 9 from one of the clasps 10,11 and then engage the pin in the jaw 13 of the other clasp. The jaw would then automatically rotate to the closed position as described above, and the latch 22 could be manually released to close the slide hammer 16, whereupon the clasp would be locked to retain the striker pin and hold the trailer sections 2,3 in the extended or retracted position. Such operation is partially automatic but provides the benefit that the driver must get out of the cab to release the arm 18 and, optionally, padlock or otherwise secure the aligned eyelets 21.

The clasp 10,11 could, however, be designed so that insertion of the striker pin 9 triggers the release of the temporary latch 22. For example, the arm 18 could be spring loaded to disengage the latch and the jaw could be arranged to push back the slide hammer 16 and hence the arm 18 to release the catch. In this case, operation would be fully automatic.

The closed and open arms 18 will in normal use remain in position, but if they are tampered with or moved for any abnormal reason, the position of the arms, either inserted or retracted with respect to the front chassis section 2, gives a clear visual indication which can be seen even in a rear view mirror from the cab.

However, even if the driver sets off without having ensured that the striker pin is locked in the correct clasp, the striker pin and clasps are rugged enough to survive any sudden impact without shearing or breaking off, and the rear section of the trailer will not become detached from the front section.

The chassis section 2 of the trailer will normally have to be provided with some additional lateral bracing, apart from the transverse beams 55 for the twist lock container mounts 7. One lateral brace 53 is provided between the clasps, and this has a channel 54 on the underside so that the pin 9 may pass underneath the brace.

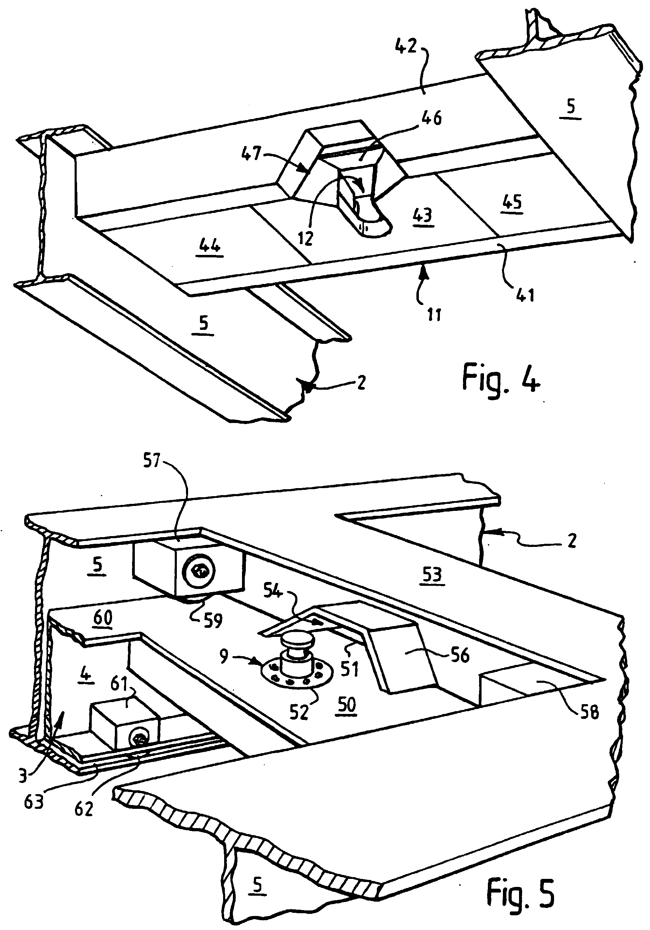

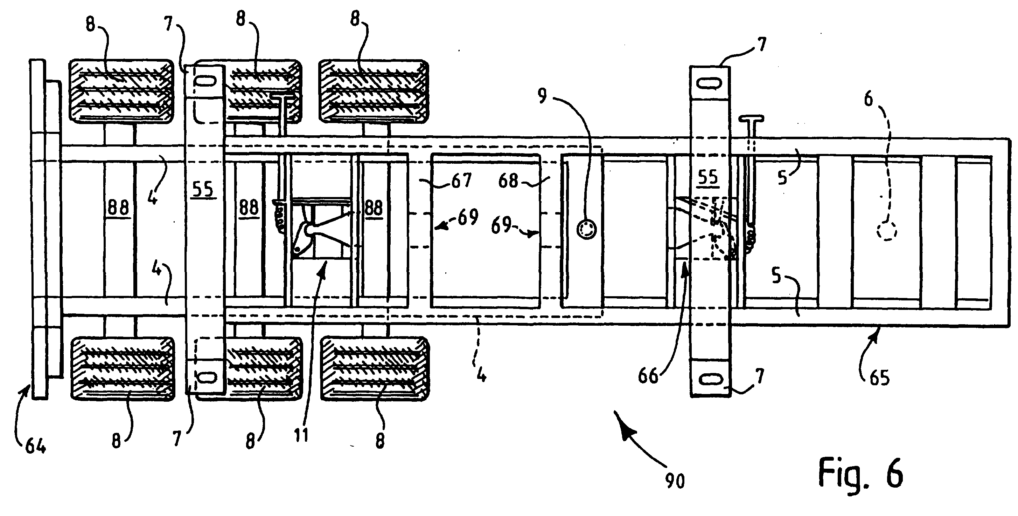

Figures 4 and 5 illustrate respectively the rear open clasp 11 and the pin 9 in more detail. The clasp 11 is welded between two transverse steel beams 41,42 which extend between the front chassis I-beams 5. The clasp mechanism itself 43 is adapted from a standard fifth wheel mechanism and has in plan view a square outline. Steel bracing plates 44,45 are welded between the sides of the clasp fifth wheel mechanism 43 and the I-beams 5.

The entrance neck 12 is open only underneath and above is protected by a cover plate 46 which extends across the full top of the clasp 11.

The underside of the front transverse beam 42 is provided with a clearance channel 47 through which the pin 9 travels to and from the neck.

The pin 9 is mounted on a surface 50 at the centre and just back from the front edge 51 of the sliding bogie section 3.

The pin is formed from a harder steel than the steel beams forming the bogie section and so has a circular base flange 52 which is bolted into a matching recess within the front surface 50. Should the pin become damaged or worn, it may then be replaced.

Figure 5 also shows the lateral brace 53 and the channel 54 underneath the brace in more detail. The lateral brace is a steel T-beam and the channel has a roof 56 to reinforce the brace where it has been cut through.

Part of roller arrangement comprising upper and lower rollers sets, is also shown in Figure 5. A pair of upper roller housings 57,58 is provided on the chassis section 2 at the corners where the lateral brace 53 is welded to the longitudinal I-beams 5. These upper roller housings house steel upper rollers 59 which run on upper faces 60 of the bogie section C-beams 4.

The C-beam 4 has similar lower roller housings 61 and lower rollers 62. These lower rollers 62 run on an upward facing surface 63 at the inside lower projection of the chassis section I-beam 5. Several of the upper 59 and lower rollers 62 are provided along the length of travel of the nested C-sections.

Figure 6 shows an embodiment of a trailer 90 that is similar to the embodiment described in detail above, except that it has a rear bogie section 64 that is longer and a front chassis section 65 that has a front clasp 66 provided farther forward in the chassis section. This extendible trailer 90 therefore has a longer length over which the sections are extendible. Because of the increased length, the bogie section 64 also has two lateral braces 67,68, each with a channel 69 underneath.

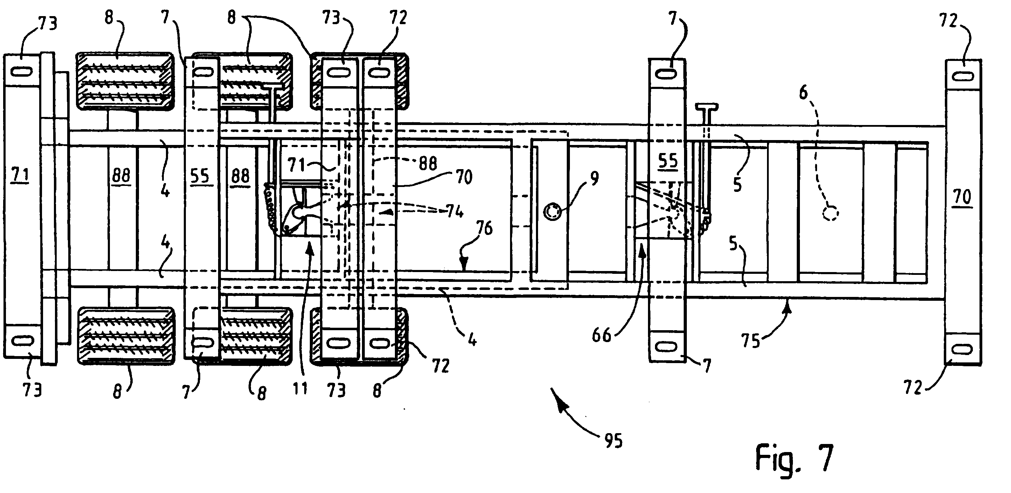

Figure 7 shows how an extendible skeletal trailer 95 similar to that of Figure 6 may be adapted to carry either one 12.2 m (40 feet) container, or two 6.1 m (20 feet) container. This trailer 95 has a chassis section 75 and a bogie section 76 with two additional pairs of transverse beams 70,71 each with a pair of standard twist lock container mounting points 72,73.

The two transverse beams 70,71 immediately in front of the rear clasp 11 each have a channel 74 underneath for passage of the striker pin 9.

The central set of four mounting points 7 can be used to carry a heavy 6.1 m container with the trailer extended so that the load is spread across an extended cab to trailer wheel base. The front set of four mounting points 72 can be used to carry a 6.1 m container with the trailer retracted, in order to improve the manoeuvrability of the trailer. The front and rear sets of points 72,73 can be used to carry two 6.1 m containers, and the front-most two 72 and rear-most two 73 points can be used to carry a 12.2 m container.

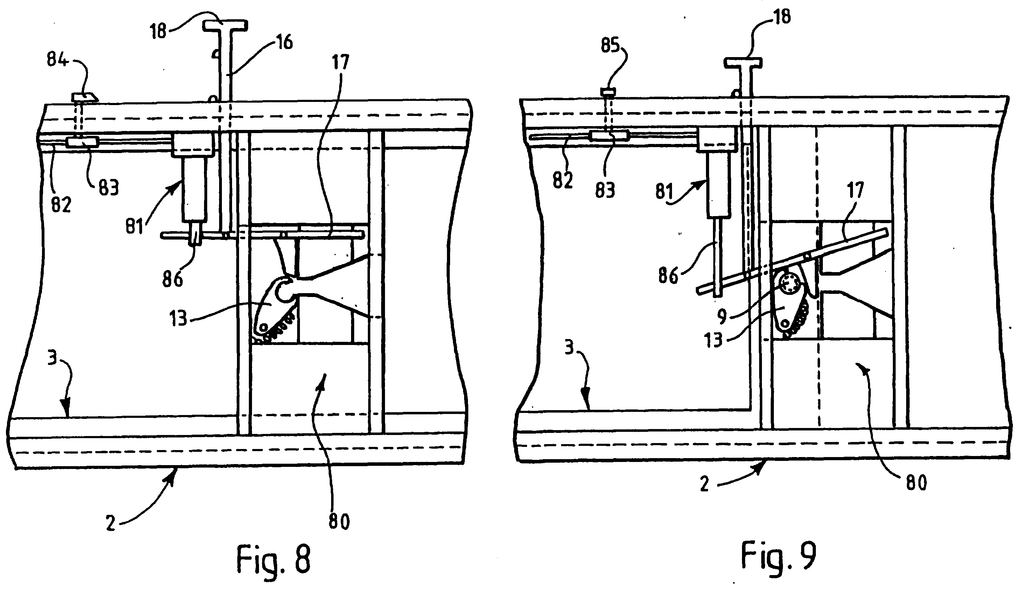

Figures 8 and 9 illustrate a clasp mechanism 80 that can be driven either remotely via a pneumatically driven actuator 81 or manually by the arm 18 as described above. For clarity, chassis members such as the wheeled bogie and transverse beams are not illustrated. The actuator 81 is supplied with an air line 82 from an air reservoir (not shown). A valve 83 is operated at the side of the trailer by a switch shown in the open position 84 in Figure 8 and the closed position 85 in Figure 9.

In the open position, air is allowed into a cylinder within the actuator to retract a piston 86 and so pull back the lever 17 and so open the clasp 80. In the closed position 85, air escapes from the cylinder to allow the piston, which is internally spring loaded, to extend and engage the clasp in the closed position.

The arm 18 provides a clear visual indication of whether the clasp is open or closed. However, because the arm moves with the piston 86, the actuator 81 must be designed with safety in mind, and must not drive the arm with more force than could be resisted by hand.

The clasp 80 may alternatively be opened and closed by hand. A latch mechanism (not illustrated) may be provided within the cylinder 81 so that when the arm retracts the lever 17 and causes the piston to retract, the piston keeps the arm retracted until the trailer can be moved to disengage the pin 9 from the clasp 80.

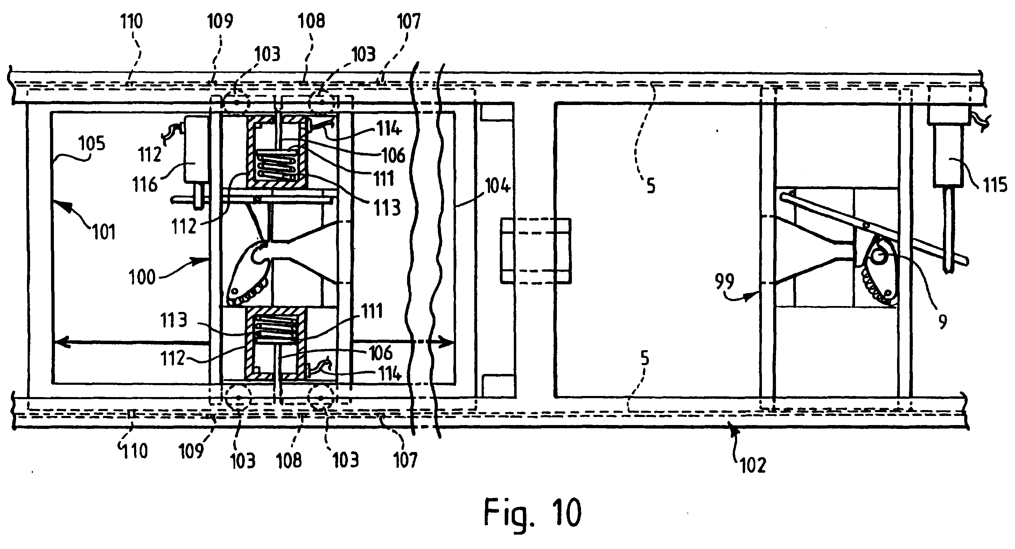

Figure 10 shows part of a trailer with a fixed front clasp 99 and an adjustable rear clasp 100 which is slidably mounted within a rectangular bed 101 on the main chassis section 102. For clarity, the drawing does not show the bogie chassis section or other trailer members. The adjustable clasp has a pair of rollers 103 on both sides. The front and rear ends of the bed 101 form end stops 104,105 which limit the extent of movement of the adjustable clasp 100, as shown by the arrows in Figure 10.

The location of the adjustable clasp 100 can be fixed at one of four or more locations by pneumatic outwardly driven pins 106 which seat in one of at least four pairs of holes 107,108,109,110 in the front chassis section I-beam 5. Each pair of holes is separated by about 200 mm from an adjacent pair of holes.

The pins 106 are each driven by a piston 111 in a cylinder 112, the pistons being outwardly biased by a spring 113 so that when the air pressure to the cylinder is released, the pins automatically seat in the holes 107-110 when the pins are aligned with the holes.

The adjustable clasp 100 may be moved and locked in a different location within the bed 101 when the striker pin 9 is locked within the adjustable clasp. To operate the adjustable bed, air is first supplied to the cylinders from a remotely operated valve (not shown) through an air line 114. This causes the pins 106 to be withdrawn from one pair of holes 107-110 along the length of the bed 101. With the bogie wheels locked by brakes, the cab is then driven a short distance, for example by 1 m if it is desired to reset the location of the adjustable bed by somewhat more than 1 m. The air supply to the cylinders 112 is then cut, and the pins 106 then push outwards against the inside of the I-beams 5 as the air pressure within the cylinders drops. The cab is then driven very slowly until the pins snap outwards into engagement with one of the pairs of holes 107-110.

Both clasps 99,100 have a pneumatically driven cylinder 115,116 for releasing the slide hammer and striker pin, and although there is no manual arm to operate the clasps, the clasps 99,100 are operated as described above. The pneumatic release cylinder 116 for the adjustable clasp 100, however, is mounted to the rear side of the clasp 100, rather than the side of an I-beam 5. This release cylinder 116 is mounted so that it passes underneath the rear end stop 105 of the bed 101 when the adjustable clasp 100 is in the rear-most location 110.

The skeletal trailers described above would have an unloaded weight of typically between 4 and 5 tonne.

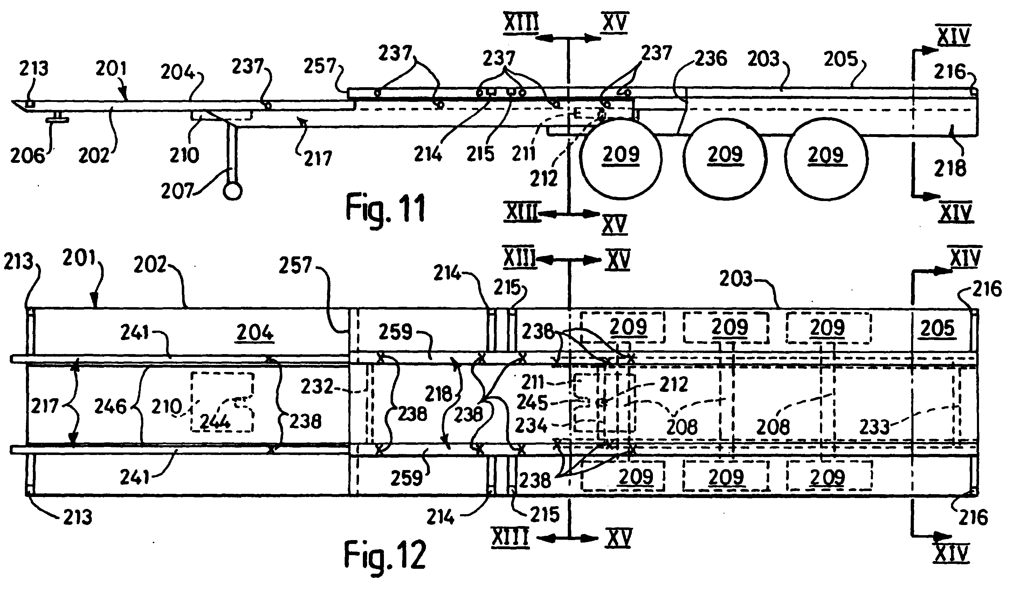

Figures 11 and 12 show an extendible flatbed trailer 201 with a front chassis section 202 and a rear bogie section 203, each of which has a floor 204,205. The front chassis section 202 has a standard mounting king pin 206 for a fifth wheel connection to a truck cab (not shown), and drop-down front support legs 207 shown in the dropped position.

The rear bogie section 203 has three axles 208 with six wheels 209. The flatbed trailer 201 could have fewer sets of wheels, but for larger types of trailers it is preferable to have three axles in order to provide a greater potential load bearing capacity. For the sake of clarity in the drawings, the details of the axle suspension and connection to the rear bogie section 203 are not shown.

The front half of the extendible trailer 202 has two fifth wheel type automatic clasp mechanisms 210,211 mounted beneath the front floor 204 on the longitudinal centre line of the trailer.

The rear half of the trailer has a fixed striker pin 212 which engages with and automatically locks within either of the clasp mechanisms 210,211 when the trailer has been extended or retracted into position. Since the flatbed trailer is shown fully extended, the striker pin 212 is shown engaged within the rear clasp 211.

The flatbed trailer 201 is suitable for carrying palletised loads and other solid or packaged goods which may be strapped down to the floor of the flatbed sections. The flatbed trailer also has mounting points 213,214,215,216 for 6.1 m or 12.2 m containers. These mounts are standard twist-lock mounts, which rotate to flip up above the level of the floor so that there is some small clearance between the container and the floor. Because there is a step 257 in the level of the floor having a height of about 120 mm, the two forward most container mounts 213 must flip up with a greater clearance above the floor than the six more rearward mounts 214,215,216.

The step 257 could, of course, be a tapered ramp to avoid a tripping hazard or to allow wheeled carts to run over the step.

Both the front and rear sections 202,203 have longitudinal frame members 217,218 made from steel beams. As can be seen from Figure 12, each frame member 217,218 is formed from parallel beams spaced equidistantly from a longitudinal centre line of the trailer.

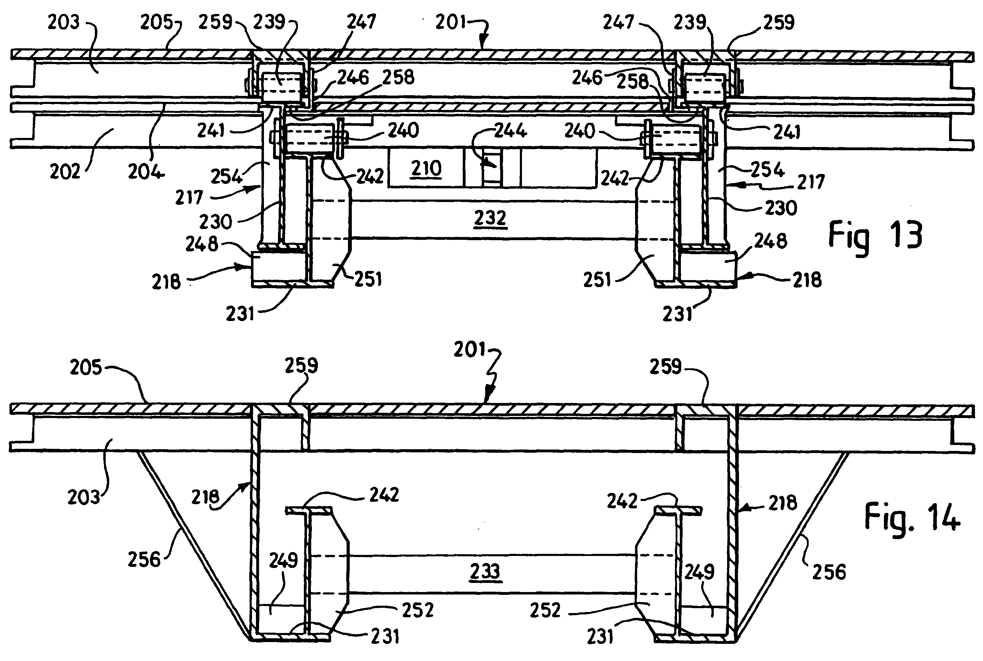

The extendible operation of the flatbed trailer may be understood from the cross-sections seen in Figures 13,14 and 15. The front frame member 217 is formed from two parallel steel I-beams 230. The rear frame member 218 is formed from two parallel inward facing steel C-beams 231, which are seen most clearly in Figure 14. These are held together by transverse struts 232,233,234.

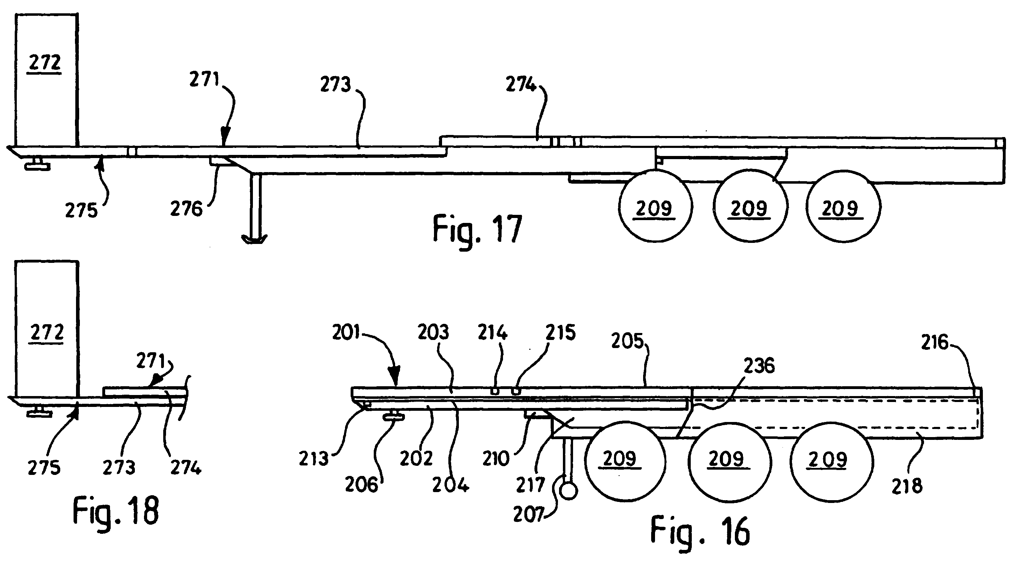

Because the front lower chassis section 202 slides underneath the rear upper bogie section 203 when the trailer is retracted, as shown in Figure 16, the outer side section of each C-beam 231 is cut away back to an edge 236.

Each beam has a number of steel rollers attached just below the floors 4,5 of the chassis and bogie sections 202,203. The locations of these rollers are indicated by the circles 237 and crosses 238 on Figures 11 and 12 respectively.

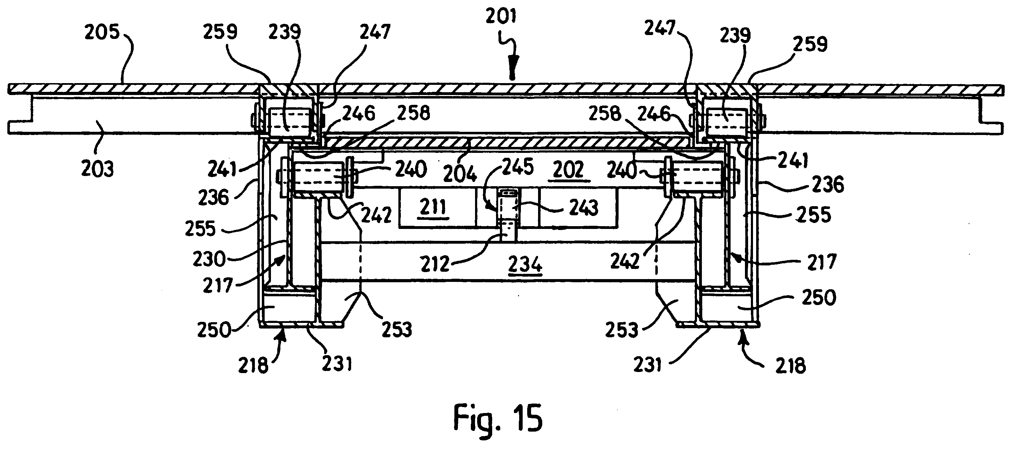

The operation of the rollers can be appreciated from Figures 13 and 15. The C-beam 231 has attached to it a set of upper rollers 239 and the I-beam 230 has a similar set of attached lower rollers 240. The upper rollers 239 roll on a flat top 241 of the I-beam 230 and the lower rollers 240 roll on a flat lip 242 of the C-beam.

As the chassis and bogie sections 202,203 are moved between extended and retracted positions, the rollers 239,240 will roll along the lengths of the beams. The fifth wheel type automatic clasp mechanisms 210,211 stop the chassis and bogie sections from moving beyond the extended and retracted positions, when the striker pin 212 enters the clasp and is captured and secured in place by a slide hammer 243 which is thrust across a neck 244,245 of the clasp mechanism.

Bach automatic clasp mechanism 210,211 may be unlocked by means of an air driven line (not shown) which pulls back the slide hammer 243 to release the striker pin 212.

As can be seen from Figure 12, the top 241 of the I-beam 230 forms part of the floor 204 of the front lower chassis section 202. Since the floor 204 may be formed from light-weight materials such as wood or aluminium alloy sheets, this top surface 241 of the I-beam provides reinforcement to help protect the surface 204 from damage during loading and loading of the flatbed trailer. Similarly, the C-beam has a top 259 which is flush with the rear bogie section floor 205.

Referring now also to Figure 16, the load of the chassis and bogie sections is borne ultimately by the axles 208 or king pin mount 206. When the extendible flatbed trailer is in the retracted position, the load on the top bogie section 203 will be transmitted directly through the C-beams 231 to the suspension system and axles 208. Since in this position the front chassis section 202 is directly beneath the rear bogie section 203, the weight of the front chassis section will be transmitted through the lower set of rollers 240 onto the flat lips 242 of the C-beams, and thence to the axles 208.

When the extendible flatbed trailer is in the extended position, however, the both front and rear sections 202,203 may carry a load, and there will in general be a twisting moment about a horizontal axis perpendicular to the length of the trailer, which would tend to pull the chassis and bogie sections apart towards the rear end of the chassis section 202. In order to prevent this from happening, the floor 204 of the chassis section 202 has a groove 246 which runs parallel to and along the inner edges of the tops 241 of both I-beams 230. Each C-beam 231 then has a retaining clip 247 attached at each upper wheel 239 and which passes into the groove 246 and hooks around an underside 258 of the top of the I-beam 241. The underside 258 of the I-beam therefore acts as a retaining surface to hold the chassis and bogie sections 202,203 together. In use, the retaining clip 247, and also the steel rollers 239,240 would be lubricated with oil so that the chassis and bogie sections could be retracted and extended smoothly.

In case the retaining clip 247 becomes loose, the C-beam has a series of spaced ribs 248,249,250 which would come into contact with the base of the I-beam to prevent the chassis and bogie sections from twisting apart. These ribs 248,249,250 also provide transverse reinforcement to the C-beam.

Other spaced transverse ribs are provided to brace the beams, and are indicated in the drawings by numerals 251 to 255. Struts may also provide reinforcement between the beams and the sections; one such pair of struts 256 may be seen in Figure 14.

The extendible flatbed trailer 201 described above is 12.2 m (40 feet) long when in the extended position, and 7.92 m (26 feet) long when retracted. The width of the trailer may be up to 2.55 m.

A longer flatbed trailer is shown in Figures 17 and 18. This trailer 271 is 13.72 m (45 feet) long when extended and 8.84 m (29 feet) long when retracted. The extra length is used to accommodate a crane unit 272, the location and size of which is shown schematically in the drawing. The construction and operation of this longer flatbed trailer 271 is similar to that of the previously described flatbed trailer 201, except that when the trailer is fully retracted, the front lower chassis section 273 does not retract fully underneath the rear upper bogie section 274, so that a shelf 275 remains extended to support the crane unit 272.

The longer flatbed trailer 271 may then be loaded and unloaded by the crane 272 in the following manner. With the flatbed trailer empty and extended, and connected to a truck cab (not shown), the trailer wheels 209 are braked and the fifth wheel type automatic clasp mechanism is released remotely. The truck then reverses to retract the trailer until the front automatic clasp mechanism 276 engages to secure the trailer 271 in the retracted position.

The crane 272 may then be used to load the trailer 271, generally by reaching to the side, although a longer crane could load from the rear, until the rear bogie section 274 has been loaded.

With the trailer wheels 209 still braked, the front automatic clasp mechanism 276 is remotely released and the truck cab driven forwards until the trailer 271 is secured in the fully extended position. The crane 272 may then load the front chassis section 273.

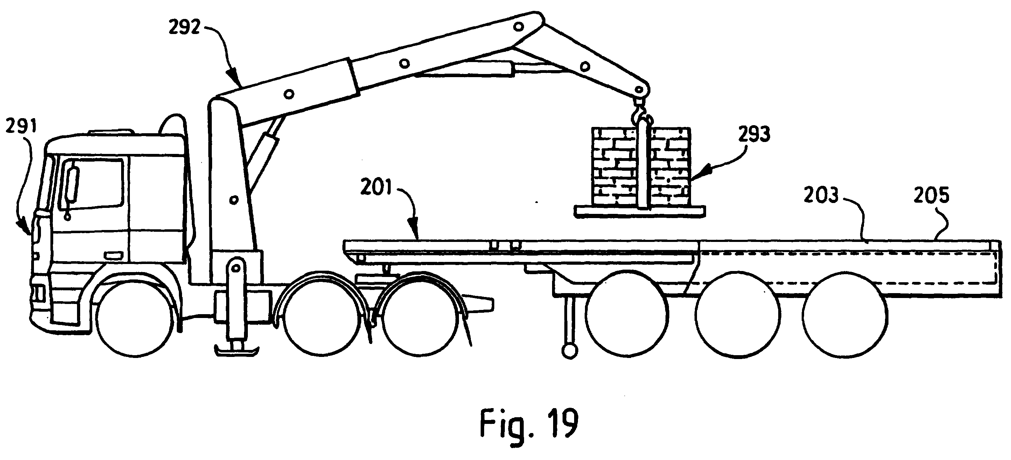

The above described operation is the same when the crane unit is part of the truck cab which is attached to a trailer, as shown in Figure 19. Here a truck cab 291 with a crane unit 292 is attached to the above-described 12.2 m (40 feet) extendible flatbed trailer 201. The trailer 201 is in the retracted position, and the crane unit 292 is depicted lifting a pallet load of bricks 293 onto the floor 205 of the rear bogie section 203.

The extendible flatbed trailer may also be provided with additional structural elements above the floor of the sections. For example, the rear half of the trailer may have drop-down sides, which would allow the trailer to haul a load which could not be fully secured only by means of straps. The front half of the flatbed trailer could then be used for more securely packaged goods, for example pallets.

There are a wide number of other potential uses, where the flexible nature of the extendible flatbed trailer could be used to advantage. For example, the flatbed trailer could be adapted for road repair work, with the rear half of the flatbed trailer having a tip-up container, and the front half being used to transport equipment such as a road roller.

In one variant of the flatbed trailer not shown in the drawings, the upper floored section, which is normally the rear section, may be made to be removable, for example by having the rear floored section 205 extending continuously over the C-beam 231, and removably attached at points by bolts to this beam. The rear floor section 205 could then be removed in order to reduce weight and increase the permissible payload of a container.

A particular advantage of the present invention is that it permits full sized flatbed trailers to be loaded and unloaded with the use of a smaller and much more economical crane unit. Because there is a trade-off between the reach of the crane arm and lifting capacity, it will also be possible to use a cheaper crane and still achieve greater lifting capacity.

The crane may also be adapted to load or unload containers from a trailer.

The ability to alter the length of the flatbed trailer could also provide other economies. For example, when travelling by ferry, the flatbed trailer could be retracted when not fully loaded and so reduce the length-related charges for the ferry crossing.

A flatbed or skeletal sliding bogie trailer may, of course have a different arrangement of beam sections and rollers from that described in detail above. In the example of the flatbed trailer, a second set of rollers may be provided within the C-beams 231 in the vicinity of the reinforcement ribs 248,249,250, which come into contact and run against the base of the I-beams 230.

The clasps and striker pin or pins may be arranged in ways other that those illustrated to engage the sections together. For example, the front chassis section may have the striker pin, and the rear section the clasps, or two outwardly facing clasps on one section may engage with two striker pins on the other section.

The embodiments illustrated all show a slidable rear bogie which is movable to extend or retract the length of the trailer. The invention, of course, also encompasses cases where the sliding bogie remains under the chassis section and fully within the overall length of the chassis section at all times.

Although the invention has been described specifically in terms of a flatbed trailer that may have a crane unit, the invention may also be applied to other trailers with, or without, mounting points for containerized loads. Flatbed trailers with additional structural elements above the floor, such as box vans, sliding wall trailers, trailers with curtain sides or tops may all employ the present invention. For example, the extendible flatbed trailer could be fitted with any of: vertical side pillars; curtain sides or top, with fold-down sides, or with rigid wall sides with a foldable top. In the latter example, the rear half of the sides could slot into a cavity in hollow-walled front sides when the trailer was retracted.

This application is a divisional application of application number GB 9603291.7, which describes and claims a trailer comprising a chassis section, a wheeled bogie section, each of the sections having a pair of longitudinal parallel frame members slidably connected to each other so that the bogie section is movable relative to the chassis section between forwards and rearwards positions, one section having a striker pin and the other section having a clasp mechanism which receives and retains the striker pin to lock the sections in place when the sections are moved to one of the positions and which releases the striker pin to unlock the sections to allow the sections to be moved to another of the positions, in which one pair of frame members is nested inside and slidably retained within the other pair of frame members, and in which transverse members extend between frame members to provide lateral bracing between the frame members, the transverse members being configured so as to permit the relative movement between the clasp and the pin.

## Claims

1. A trailer comprising a chassis section and a wheeled bogie section slidably connected to the chassis section and relatively movable between extended and retracted positions at which positions the sections may be secured into engagement with each other, the sections having load bearing floors, the floor of one section sliding under the floor of the other section when the sections are moved to a retracted position, characterised in that the trailer has a crane mounted on the section having the floor which slides under the other floor, the crane having an arm for loading and unloading the trailer.

2. A trailer as claimed in Claim 1, in which the sections automatically engage with each other when moved to an extended or retracted position.

3. A trailer as claimed in Claim 1 or Claim 2, in which the arm of the crane has a reach which is sufficient to load or unload the section of the flatbed trailer farthest from the crane only when the trailer is in a retracted position.

4. A trailer as claimed in any preceding claim, in which one section has a striker pin and the other section has a clasp mechanism which receives and retains the striker pin to secure the sections into engagement with each other when the sections are moved to one of the positions and which releases the striker pin to allow the sections to be moved to another of the positions.

5. A trailer as claimed in Claim 4, in which the clasp has a jaw which receives the striker pin.

6. A trailer as claimed in Claim 4 or Claim 5, in which the clasp and striker pin are automatically self-locking when the striker pin enters the clasp.

7. A trailer as claimed in any one of Claims 4 to 6, in which the clasp is fixed to a section.

8. A trailer as claimed in any one of Claims 4 to 7, in which the clasp is slidably connected to a section and movable between forwards and rearwards locations with respect to the section and has locking means provided between the clasp and the section so that the clasp and the section may be locked into engagement at the locations.

9. A trailer as claimed in any one of Claims 4 to 8, in which the clasp is a fifth wheel type mechanism.

10. A trailer as claimed in any one of Claims 4 to 9, in which the striker pin is fixed to a chassis section.

11. A trailer as claimed in any one of Claims 4 to 10, in which one section has one striker pin which locks with either one of two clasps in the other section.

12. A trailer as claimed in one of Claims 4 to 11, in which the striker pin is in the bogie section.

13. A trailer as claimed in any one of Claims 4 to 12, in which the striker pin and clasp are relatively movable with respect to each other each other along a longitudinal centre line of the trailer.

14. A trailer as claimed in any one of Claims 4 to 13, in which the clasp has an entrance neck leading to the jaw through which the striker pin moves when it is received and released.

15. A trailer as claimed in any one of Claims 4 to 14, in which the jaw is pivotable about an axis between an open and a closed position and is biased to the open position to receive or release the striker pin through the neck, and one side of the open jaw holds back a locking slide hammer that is biased towards the open jaw and across the neck, so that when the striker pin is received by the open jaw the striker pin causes the jaw to pivot to the closed position whereupon the slide hammer is released to move across and close the neck to lock the jaw in the closed position.

16. A trailer as claimed in Claim 15, in which the locking slide hammer in the locked position is secured in place by a second locking mechanism.

17. A trailer as claimed in Claim 15 or Claim 16, in which the clasp when locked is released by retracting the slide hammer and latching the locking slide hammer in the retracted position, and then withdrawing the striker pin to open the jaw.

18. A trailer as claimed in any one of Claims 15 to 17, in which the locking slide hammer is activated by an arm which extends to the side of the trailer and which has clearly visible locked and unlocked positions.

19. A trailer as claimed in any one of Claims 15 to 17, in which retraction of the locking slide hammer is activated pneumatically.

20. A trailer as claimed in any one of Claims 4 to 19, in which the chassis section and the bogie section are movable between one forward and one rearward position.

21. A trailer as claimed in any one of Claims 4 to 20, in which the trailer has mounting points for carrying containerized loads.

22. A trailer as claimed in any one of Claims 4 to 21, in which the bogie section when moved from a forward to a rearward position extends the length of the trailer.

23. A trailer as claimed in any preceding claim, in which each section has a longitudinal parallel pair of frame members that extend beneath the floors, one pair of frame members being I-beams and the other pair of frame members being C-beams, each I-beam being retained within and slidable along a C-beam.

24. A trailer as claimed in Claim 23, in which rollers run between the I-beam and C-beam.

25. A trailer as claimed in Claim 23 or Claim 24, in which the floor of the section that slides under the floor of another section has a longitudinal load carrying track for supporting the other section.

26. A trailer as claimed in Claim 25, in which one of the frame members has a surface forming the load carrying track.

27. A trailer as claimed in Claim 25 or Claim 26, in which the load carrying track is substantially flush with the floor of the section that slides under the floor of another section.

28. A trailer as claimed in Claim 27, in which the floor has a channel that runs parallel with the track for the distance between the forward and rearward positions, the channel having an inner retention surface, and the section which runs over the track having a retention means adapted to engage with the retention surface in order to prevent the sections from separating.

29. A trailer as claimed in any one of Claims 23 to 28, in which the trailer has additional structural elements above the floor of a section for containing a load.

30. A truck comprising a tractor and a trailer, in which the trailer is as claimed in any preceding claim.

31. A truck comprising a tractor and an extendible flatbed trailer, the tractor having a crane with an arm for loading and unloading the trailer, wherein the trailer comprises a chassis section and a wheeled bogie section slidably connected to the chassis section and relatively movable between extended and retracted positions at which positions the sections may be secured into engagement with each other, each of the sections having a floor, characterised in that the floor of the chassis section slides under the floor of the bogie section when the sections are moved to a retracted position.

32. A truck as claimed in Claim 31, in which the arm of the crane has a reach which is sufficient to load or unload the section farthest from the crane only when the trailer is in the retracted position.

33. A method of loading an extendible flatbed trailer attached to a tractor, the tractor or the trailer having a crane mounted thereon, and the trailer having floored chassis and bogie sections slidably connected and movable with respect to each other between extended and retracted positions at which positions the sections may be secured into engagement with each other, one of the floors sliding under the floor of the other section when the bogie section is moved from an extended to a retracted position, characterised in that the method comprises the steps of: moving the sections to a retracted position; using the crane to load one section; moving the sections to an extended position so that the one loaded section moves away from the crane; and using the crane to load the other section.
